# FASCICULE DE BREVET EUROPEEN

(11) **EP 3 005 454 B1**
(45) Date de publication et mention de la délivrance du brevet: **01.03.2017**
(21) Numéro de dépôt: 14726373.5
(22) Date de dépôt: 27.05.2014
(51) Int. Cl.: H01M 8/0432, H01M 8/04746, H01M 8/043, H01M 8/04089, H01M 8/0258, H01M 8/1018

(54) **SYSTÈME À PILE À COMBUSTIBLE**
BRENNSTOFFZELLENSYSTEM
FUEL CELL SYSTEM

(30) Priorité: 27.05.2013 FR 1354748
(43) Date de publication de la demande: 13.04.2016
(73) Titulaire: Compagnie Générale des Etablissements Michelin, 63000 Clermont-Ferrand (FR); Michelin Recherche et Technique S.A., 1763 Granges-Paccot (CH)
(72) Inventeur: BRAILLARD, Vincent, F-63040 Clermont-Ferrand Cedex 9 (FR); OLSOMMER, David, F-63040 Clermont-Ferrand Cedex 9 (FR)
(74) Mandataire: Roussy, Delphine
(86) Numéro de dépôt international: PCT/EP2014/060904
(87) Numéro de publication internationale: WO 2014/191386

(56) Documents cités:
- WO-A1-99/28985
- JP-A- 2002 158 023
- US-A1- 2010 167 146
- US-A1- 2010 190 078

## Description

### DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

### ETAT DE LA TECHNIQUE

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles. Une pile à combustible comporte un empilement de cellules de base, chacune comprenant une anode, une cathode et une membrane échangeuse d'ions, faisant office d'électrolyte. Lors du fonctionnement d'une pile à combustible, deux réactions électrochimiques simultanées se produisent : une oxydation du carburant à l'anode, et une réduction de comburant à la cathode. Ces deux réactions produisent des ions, positifs et négatifs, qui se combinent au niveau de la membrane et produisent de l'électricité sous la forme d'une différence de potentiels. Dans le cas d'une pile à combustible oxygène-hydrogène, ce sont les ions H+ et O- qui se combinent.

Les assemblages membrane-électrodes, ou cellules, sont empilés en séries et séparés par une plaque bipolaire qui conduit les électrons de l'anode d'une cellule à la cathode de la cellule voisine. A cet effet, un canal est prévu sur toute la face des plaques bipolaires en contact avec la membrane. Chaque canal possède une entrée par laquelle pénètre le carburant ou le comburant, et une sortie par laquelle sont évacués les gaz neutres, l'eau générée par la réaction électrochimique, et l'humidité résiduelle de l'hydrogène de son côté. Par la suite, on désignera par « canal cathodique » un canal en contact avec la cathode d'une cellule.

L'alimentation en gaz comburant, notamment dans le cas où on utilise de l'air, est effectuée par le biais d'un compresseur, situé dans un circuit de gaz en amont de la pile à combustible. On a constaté que, du fait de la compression, les gaz sortant du compresseur sont chauds et secs, et ont donc tendance à assécher la membrane polymère, ce qui provoque une baisse des performances de la pile, et dégrade ladite membrane.

Il est donc utile d'humidifier les gaz avant qu'ils n'atteignent la membrane. A cet effet, on connaît des humidificateurs dans lesquels l'humidité contenue dans les gaz sortants de la pile est transférée, par perméation, vers les gaz secs entrants dans la pile. Ces humidificateurs se présentent sous la forme de boitiers de taille relativement importante. Par ailleurs, afin de permettre la perméation, une membrane, par exemple en Nafion®, est utilisée. De telles membranes s'avèrent relativement coûteuses. En outre, on a constaté qu'avec un tel moyen d'humification, l'humidité n'était pas homogène dans le canal d'acheminement des gaz situés sur la plaque bipolaire de la pile à combustible. En effet, le gaz pré-humidifié entrant dans le canal a tendance à se charger encore en humidité tout au long du canal, avec pour conséquence une humidité beaucoup plus importante en sortie qu'en entrée de canal.

Le document WO99 /28985 décrit un un système à pile à combustible comprenant un empilement de cellules électrochimiques, un compresseur pour l'alimentation en gaz comburant et un dispositif d'inversion entre les points d'entrée et de sortie du comburant pour la gestion de l'eau dans la pile à combustible.

Le document US2010167146 divulgue également un système à pile à combustible avec un dispositif d'inversion entre les points d'entrée et de sortie du comburant selon la mesure de pression dans le circuit d'alimentation en gaz comburant pour la gestion de l'eau dans la pile à combustible.

L'objectif de la présente invention est donc de proposer une solution pour maintenir les performances de la pile. tout en remédiant aux inconvénients de l'art antérieur.

### BREVE DESCRIPTION DE L'INVENTION

L'invention propose ainsi un système à pile à combustible comprenant un empilement de cellules électrochimiques formant une pile à combustible à membrane polymère échangeuse d'ions, un circuit d'alimentation en gaz carburant et un circuit d'alimentation en gaz comburant, selon la revendication 1, ledit circuit d'alimentation en gaz comburant comprenant un compresseur destiné à compresser l'air ambiant avant son entrée dans la pile à combustible, et un échappement de sortie destiné à évacuer les gaz sortant de la pile à combustible,
ledit circuit d'alimentation étant relié à la pile à combustible en un premier et un second points d'accès,
le système étant caractérisé en ce qu'il comprend en outre un élément d'aiguillage possédant deux positions : une première position dans laquelle la sortie du compresseur est reliée au premier point d'accès, et le second point d'accès est relié à l'échappement de sortie, et une seconde position dans laquelle la sortie du compresseur est reliée au second point d'accès, et le premier point d'accès est relié à l'échappement de sortie et en ce que le système de pile à combustible comprend deux capteurs de pression installés dans le circuit d'alimentation en gaz comburant entre l'élément d'aiguillage et respectivement les premier et second points d'accès.

Un tel système permet, ainsi qu'expliqué par la suite à l'aide des figures, de conserver les performances de la pile à combustible et une bonne humidification de la membrane, tout en s'abstenant d'utiliser un humidificateur encombrant et coûteux tel que celui utilisé dans l'état de la technique.

Dans une réalisation préférentielle, les cellules électrochimiques sont séparées par des plaques bipolaires, un canal étant ménagé dans chaque face d'une plaque bipolaire pour la circulation des gaz carburant et comburant, caractérisé en ce que les premier et second points d'accès forment une entrée et une sortie d'un canal. Ainsi, lorsque l'élément d'aiguillage est situé dans la première position, le gaz circule dans le canal du premier point vers le second point, et inversement lorsque l'élément d'aiguillage est situé dans la deuxième position.

Dans une réalisation préférentielle, l'élément d'aiguillage est une vanne quatre voies. Cette vanne peut être une vanne monostable ou bistable.

Le système comprend deux capteurs de pression installés dans le circuit d'alimentation en gaz comburant, entre l'élément d'aiguillage et respectivement les premier et second points d'accès. Ces capteurs de pression permettent de vérifier en permanence le fonctionnement correct de la vanne, par comparaison des pressions présentes en entrée et en sortie de la pile à combustible.

L'invention concerne également un procédé de pilotage d'un système à pile à combustible selon l'invention, le procédé comprenant l'étape de piloter l'élément d'aiguillage de manière à le faire passer de la première à la deuxième position selon un cycle régulier. Ce cycle est, dans une réalisation préférentielle, d'une durée comprise entre quelques secondes et quelques minutes, par exemple entre 15 et 30 secondes.

Par ailleurs, dans une réalisation préférentielle, le procédé comprend une étape de mesure de température au sein de la pile à combustible, et dans ce cas le pilotage de l'élément d'aiguillage n'est effectué que lorsque la température devient supérieure à un seuil prédéterminé. Une telle caractéristique permet d'améliorer les conditions de démarrage à froid de la pile à combustible. En effet, tant que la pile n'est pas dégelée, on n'effectue pas l'alternance, ce qui évite d'humidifier l'ensemble du canal alors même que la température dans la pile entraînerait un gel immédiat de l'eau.

Par ailleurs, le procédé de pilotage selon l'invention permet de provoquer une pénurie d'air régulière à l'entrée de la pile à combustible. Une telle pénurie permet un maintien des performances de la pile sur une durée plus longue. En effet, la cathode d'une cellule est chargée en catalyseur, à savoir un composé capable d'augmenter la vitesse de réaction dont la cathode est le siège. Or, l'oxydation progressive du platine utilisé dans le catalyseur de la cathode conduit à une baisse de performance se traduisant par une baisse de tension. La pénurie régulière d'air permet que la réaction au niveau du platine s'inverse et devienne une réaction de réduction, ce qui permet de préserver les performances du catalyseur.

### BREVE DESCRIPTION DES FIGURES

D'autres avantages et caractéristiques de l'invention apparaîtront avec la description, effectuée à titre non limitatif, de différentes mises en oeuvre illustrées par les figures suivantes :
- la figure 1 montre le circuit cathodique d'un système à pile à combustible de l'état de la technique,
- la figure 2 montre le circuit cathodique d'un système à pile à combustible selon la présente invention.

### DESCRIPTION DE MEILLEURS MODES DE REALISATION DE L'INVENTION

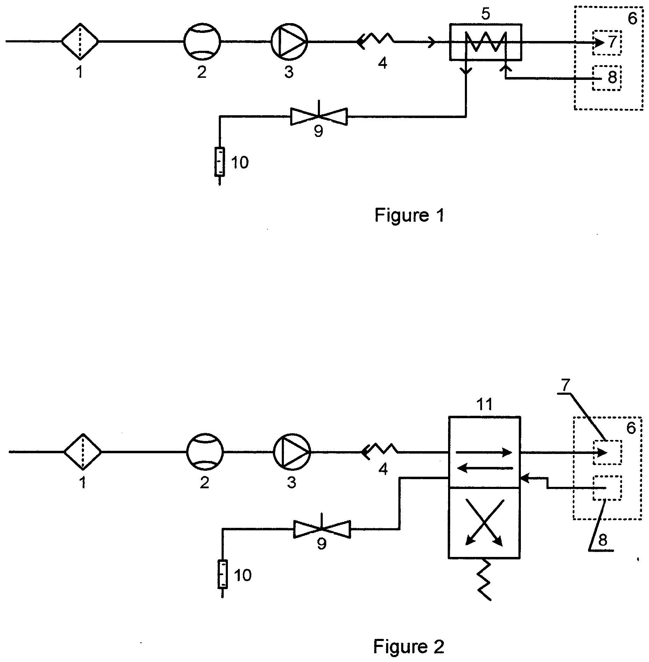

A la figure 1, on voit un système comprenant une pile à combustible 6 du type à électrolyte sous la forme d'une membrane polymère (c'est à dire de type PEFC pour Polymer Electrolyte Fuel Cell ou PEM pour Proton Exchange Membrane). La pile à combustible 6 est approvisionnée par deux gaz, à savoir le carburant (l'hydrogène stocké ou fabriqué à bord du véhicule) et le comburant (air ou l'oxygène pur) qui alimentent les électrodes des cellules électrochimiques. A cet effet, le système comprend deux circuits de gaz : un circuit d'alimentation en gaz carburant, également appelé circuit anodique, et un circuit d'alimentation en gaz comburant, également appelé circuit cathodique. La figure 1 ne représente que les éléments du circuit cathodique utiles à la compréhension de l'invention. Bien entendu, la présente invention n'est pas limitée à ces éléments, et peut inclure tous les dispositifs connus de l'homme du métier et utilisables dans le cas d'un tel système à pile à combustible.

Ainsi, l'installation comprend un circuit d'alimentation en air côté cathode. Ce circuit comprend un filtre d'entrée d'air 1, un débitmètre 2 permettant de mesurer le débit de l'air entrant, un compresseur d'air 3, et une vanne anti-retour 4, permettant d'éviter que du gaz sortant de la pile à combustible ne revienne en direction du compresseur 3. Comme indiqué précédemment, à la sortie du compresseur 3, l'air est chaud et sec, et risquerait donc, s'il était introduit pendant une trop longue durée dans la pile à combustible, de dégrader la membrane polymère. Par conséquent, dans une pile classique, un humidificateur 5, par exemple du type de ceux de la marque Permapure®, est placé en amont de l'entrée 7 qui permet l'entrée de gaz comburant dans la pile à combustible.

Le principe de l'humidificateur 5 est le suivant : on sait que les gaz sortants de la pile à combustible sont chargés en humidité, du fait de la demi-réaction chimique se produisant à la cathode 02 + 4 H⁺ + 4 e- = 2 H2O qui produit de l'eau. Ce gaz sortant par la sortie 8 de la pile est introduit dans l'humidificateur 5, en même temps que le gaz sec sortant du compresseur 3. L'humidificateur 5 comprend une membrane polymère, par exemple de type Nafion®. A travers cette membrane, une partie de l'humidité présente dans les gaz sortants de la pile à combustible est transférée vers les gaz secs avant leur entrée dans la pile à combustible, ce qui permet de garantir un niveau d'humidité suffisant pour ne pas endommager la membrane polymère de la pile à combustible 6. Les gaz sortants de la pile sont ensuite dirigés, après leur passage dans l'humidificateur 5, vers un échappement de sortie 10, via une vanne de régulation de pression 9. Une telle configuration présente différents inconvénients liés à l'utilisation d'un tel humidificateur. En effet, cet humidificateur est très encombrant, puisqu'il représente une fraction du volume non négligeable de la pile à combustible 6 (il est à noter que les dimensions utilisées sur les figures 1 et 2 ne sont pas représentatives de la réalité). Or, dans le cas d'une application mobile, telle que l'utilisation dans un véhicule, il est utile de pouvoir réduire au maximum le poids et l'encombrement de l'ensemble. Par ailleurs les membranes polymères utilisées dans l'humidificateur sont relativement chères. En outre, dans le cas d'une utilisation d'un tel humidificateur, l'humidité n'est pas homogène dans le canal de la plaque bipolaire côté cathode. En effet, les gaz se chargeant en humidité au cours de leur parcours dans le canal, et donc de la réaction électrochimique, il en résulte une très forte humidité en fin de canal.

Pour remédier à ces inconvénients, la présente invention propose une solution dont un exemple de mise en oeuvre est montré en figure 2. Cette installation comprend une vanne 11, reliée d'un côté à la vanne anti-retour 4 et à la vanne de régulation de pression 9, et de l'autre côté à la pile à combustible, au niveau des entrée et sortie 7 et 8. La vanne 11 est une vanne quatre voies, qui peut être monostable ou bistable. Le choix entre les deux s'effectuera notamment au vu des contraintes énergétiques du système, puisque dans un cas il faut maintenir un courant électrique pour maintenir la vanne dans la seconde position, alors que dans l'autre cas une simple impulsion permet de faire passer la vanne de l'une à l'autre des positions, ce qui se révèle avantageux en termes de consommation d'énergie.

Grâce au pilotage de la vanne 11, la sortie du compresseur d'air 3 est reliée alternativement à l'entrée 7 de la pile à combustible, et à la sortie 8 de la pile à combustible. On utilise ici les termes « entrée » et « sortie » par similitude avec la figure 1, mais dans la configuration de la figure 2 ces points d'accès 7 et 8 sont alternativement des entrées et des sorties de la pile à combustible. Ainsi, dans une première position, le gaz issu du compresseur 3 pénètre dans la pile par l'entrée 7, il parcourt le canal situé sur la plaque bipolaire, parcours au cours duquel la réaction électrochimique se produit. Les gaz résultant de cette réaction ressortent de la pile par la sortie 8 et sont alors dirigés vers la vanne de régulation de sortie 9. Dans une seconde position, le gaz issu du compresseur d'air 3 est dirigé vers la sortie 8, il parcourt le canal situé sur la plaque bipolaire jusqu'à l'entrée 7, et les gaz sortants sont ensuite dirigés, via la vanne 11, vers la vanne de régulation de sortie 9.

Ainsi, le gaz circule alternativement dans un sens et dans l'autre dans le canal. Or, ainsi qu'expliqué précédemment, lors de son trajet dans le canal, le gaz se charge en eau de par la réaction électrochimique qui se produit. Ainsi, la partie du canal qui se trouve en fin de trajet présente un taux d'humidité très élevé. En alternant l'entrée du gaz, on permet ainsi au gaz sec issu du compresseur 3 d'entrer dans la pile par une portion de canal présentant une humidité élevée, et ainsi de se charger en eau, afin de ne pas dégrader la membrane polymère. Ainsi, on fournit un système permettant de garantir une humidification correcte des gaz en contact avec la membrane sans qu'il ne soit nécessaire de les humidifier avant leur entrée dans la pile 6. Ceci est très avantageux en termes de coût et d'encombrement, puisque la vanne quatre voies est un dispositif courant, disponible à faible coût et présentant un faible encombrement.

En outre, l'alternance d'entrée de gaz entre les points d'accès 7 et 8 permet d'alterner le sens de parcours du gaz dans le canal, et ainsi d'homogénéiser l'humidité tout au long de ce canal. Ainsi, l'humidité varie de manière parabolique le long du canal, avec un point haut atteint au milieu du canal, sans atteindre les très hauts niveaux atteints en fin de canal dans un système classique.

Ainsi, la présente invention permet de fournir un système à pile à combustible tel les performance du catalyseur de la cathode sont préservées et que l'humidification des gaz est préservée, sans augmenter le coût et l'encombrement du système de manière démesurée.

## Revendications

1. Système à pile à combustible comprenant un empilement de cellules électrochimiques formant pile à combustible (6) à membrane polymère échangeuse d'ions, un circuit d'alimentation en gaz carburant et un circuit d'alimentation en gaz comburant,
ledit circuit d'alimentation en gaz comburant comprenant un compresseur (3) destiné à compressé l'air ambiant avant son entrée dans la pile à combustible (6), et un échappement de sortie (10) destiné à évacuer les gaz sortant de la pile à combustible,
ledit circuit d'alimentation étant relié à la pile à combustible en un premier (7) et un second points (8) d'accès,
le système étant **caractérisé en ce qu'**il comprend en outre un élément d'aiguillage (11) possédant deux positions : une première position dans laquelle la sortie du compresseur (3) est reliée au premier point d'accès (7), et le second point d'accès (8) est relié à l'échappement de sortie (10), et une seconde position dans laquelle la sortie du compresseur (3) est reliée au second point d'accès (8), et le premier point d'accès (7) est relié à l'échappement de sortie (10) et **en ce que** le système de pile à combustible comprend deux capteurs de pression installés dans le circuit d'alimentation en gaz comburant entre l'élément d'aiguillage et respectivement les premier et second points d'accès.

2. Système selon la revendication 1, dans lequel les cellules électrochimiques sont séparées par des plaques bipolaires, un canal étant ménagé dans chaque face d'une plaque bipolaire pour la circulation des gaz carburant et comburant, **caractérisé en ce que** les premier et second points d'accès forment une entrée et une sortie d'un canal.

3. Système selon la revendication 1 ou 2, dans lequel l'élément d'aiguillage est une vanne quatre voies.

4. Procédé de pilotage d'un système à pile à combustible selon l'une des revendications précédentes, le procédé comprenant l'étape de piloter l'élément d'aiguillage de manière à le faire passer de la première à la deuxième position selon un cycle régulier afin de créer une pénurie de gaz comburant à l'entrée de la pile à combustible.

5. Procédé de pilotage selon la revendication 4 dans lequel le cycle régulier a une durée de 15 secondes.

6. Procédé de pilotage selon la revendication 4 ou 5 comprenant une étape de mesure de
température au sein de la pile à combustible, et dans lequel le pilotage de l'élément d'aiguillage n'est effectué que lorsque la température devient supérieure à un seuil prédéterminé.

## Patentansprüche

1. Brennstoffzellensystem, das einen Stapel elektrochemischer Zellen, die eine Brennstoffzelle (6) mit Ionenaustausch-Polymermembran bilden, eine Versorgungsleitung mit Treibgas und eine Versorgungsleitung mit brandförderndem Gas enthält,
wobei die Versorgungsleitung mit brandförderndem Gas einen Verdichter (3), der dazu bestimmt ist, die Umgebungsluft vor ihrem Eintritt in die Brennstoffzelle (6) zu verdichten, und einen Ausgangsauslass (10) enthält, der dazu bestimmt ist, die aus der Brennstoffzelle austretenden Gase abzuführen,
wobei die Versorgungsleitung an einem ersten (7) und einem zweiten (8) Zugangspunkt mit der Brennstoffzelle verbunden ist,
wobei das System **dadurch gekennzeichnet ist, dass** es außerdem ein Umlenkelement (11) enthält, das zwei Stellungen besitzt: eine erste Stellung, in der der Ausgang des Verdichters (3) mit dem ersten Zugangspunkt (7) und der zweite Zugangspunkt (8) mit dem Ausgangsauslass (10) verbunden ist, und eine zweite Stellung, in der der Ausgang des Verdichters (3) mit dem zweiten Zugangspunkt (8) und der erste Zugangspunkt (7) mit dem Ausgangsauslass (10) verbunden ist, und dass das Brennstoffzellensystem zwei Druckfühler enthält, die in der Versorgungsleitung mit brandförderndem Gas zwischen dem Umlenkelement und dem ersten bzw. zweiten Zugangspunkt montiert sind.

2. System nach Anspruch 1, wobei die elektrochemischen Zellen durch zweipolige Platten getrennt werden, wobei in jeder Seite einer zweipoligen Platte ein Kanal für die Strömung der Treibgase und brandfördernden Gase ausgespart ist, **dadurch gekennzeichnet, dass** der erste und der zweite Zugangspunkt einen Eingang und einen Ausgang eines Kanals bilden.

3. System nach Anspruch 1 oder 2, wobei das Umlenkelement ein Vierwegeventil ist.

4. Verfahren zum Steuern eines Brennstoffzellensystems nach einem der vorhergehenden Ansprüche, wobei das Verfahren den Schritt enthält, das Umlenkelement so zu steuern, dass es gemäß einem regelmäßigen Zyklus von der ersten in die zweite Stellung übergeht, um einen Mangel an brandförderndem Gas am Eingang der Brennstoffzelle zu erzeugen.

5. Steuerverfahren nach Anspruch 4, wobei der regelmäßige Zyklus eine Dauer von 15 Sekunden hat.

6. Steuerverfahren nach Anspruch 4 oder 5, das einen Schritt der Temperaturmessung innerhalb der Brennstoffzelle enthält, und wobei das Steuern des Umlenkelements erst durchgeführt wird, wenn die Temperatur höher wird als eine vorbestimmte Schwelle.

## Claims

1. Fuel cell system comprising a stack of electrochemical cells forming a polymer ionexchange membrane fuel cell (6), a fuel gas supply circuit and an oxidant gas supply circuit,
said oxidant gas supply circuit comprising a compressor (3) intended to compress the ambient air before it enters the fuel cell (6), and an outlet exhaust (10) intended to discharge the gases leaving the fuel cell,
said supply circuit being connected to the fuel cell at a first access point (7) and a second access point (8),
the system being **characterized in that** it additionally comprises a switching element (11) that has two positions: a first position in which the outlet of the compressor (3) is connected to the first access point (7), and the second access point (8) is connected to the outlet exhaust (10), and a second position in which the outlet of the compressor (3) is connected to the second access point (8), and the first access point (7) is connected to the outlet exhaust (10) and **in that** the system additionally comprises two pressure sensors installed in the oxidant gas supply circuit, between the switching element and the first and second access points respectively.

2. System according to Claim 1, in which the electrochemical cells are separated by bipolar plates, a channel being made in each face of a bipolar plate for the circulation of the fuel and oxidant gases, **characterized in that** the first and second access points form an inlet and an outlet of a channel.

3. System according to Claim 1 or 2, in which the switching element is a four-way valve.

4. Process for controlling a fuel cell system according to one of the preceding claims, the process comprising the step of controlling the switching element so as to move it from the first position to the second position according to a regular cycle.

5. Control process according to Claim 4, in which the regular cycle has a duration of 15 seconds.

6. Control process according to Claim 4 or 5, comprising a step of measuring the temperature within the fuel cell, and in which the control of the switching element only takes place when the temperature becomes higher than a predetermined threshold.
